Europäisches Patentamt

European Patent Office

Office européen des brevets

(11) Veröffentlichungsnummer: **0 213 367 B1**

(12) **EUROPÄISCHE PATENTSCHRIFT**

(19)

(12)

(45) Veröffentlichungstag der Patentschrift:
25.07.90

(21) Anmeldenummer: 86110058.4

(22) Anmeldetag: 22.07.86

(51) Int. Cl.⁵: **F16F 1/36, B60G 3/28,
B60G 11/00**

(54) **Radaufhängung für Fahrzeuge.**

(30) Priorität: 24.08.85 DE 3530353

(43) Veröffentlichungstag der Anmeldung:
11.03.87 Patentblatt 87/11

(45) Bekanntmachung des Hinweises auf die Patenterteilung:
25.07.90 Patentblatt 90/30

(84) Benannte Vertragsstaaten:
DE FR GB IT

(56) Entgegenhaltungen:
EP-A- 0 042 068
GB-A- 1 511 692
US-A- 2 534 722
US-A- 3 429 566

(73) Patentinhaber: Adam Opel Aktiengesellschaft,
Bahnhofsplatz 1 Postfach 1560,
D-6090 Rüsselsheim(DE)

(72) Erfinder: Krehan, Peter, Dipl.-Ing.,
Johann-Sebastian-Bach-Strasse 22,
D-6090 Rüsselsheim(DE)
Erfinder: Oppelt, Werner, Schweriner Strasse 5,
D-6097 Trebur 3(DE)

(74) Vertreter: Rosenfeld, Jürgen, Dipl. Ing. et al, Adam Opel
Ag Patentabteilung Bahnhofsplatz 1 Postfach 17 10,
D-6090 Rüsselsheim(DE)

## Beschreibung

Die Erfindung betrifft eine Radaufhängung für Fahrzeuge mit einem aus faserverstärktem Kunststoff bestehenden, federnden Radführungselement.

In dem allgemeinen Bestreben, das Gewicht von Fahrzeugen durch die Verwendung von Kunststoffteilen zu reduzieren, hat man auch bereits versucht, Teile der Radaufhängung aus Kunststoff herzustellen. So ist bereits eine aus fasergefülltem Kunststoff ausgebildete Verbundlenkerachse für Kraftfahrzeuge bekannt (DE-OS 30 04 194), bei der sich zwei sich zumindest annähernd in Fahrzeuglängsrichtung erstreckende seitliche Lenkerteile über ein tordierbares und in allen Richtungen biegesteifes Querglied formsteif miteinander verbunden sind. Die Lenkerteile sind an ihren aufbauseitigen Enden mit Lagern zur Anlenkung am Fahrzeugaufbau und an ihren freien Enden mit die Räder tragenden Radachsen ausgestattet. Hierbei werden die Lenkerteile und das Querglied aus zwei dünnwandigen, profilierten Halbschalen gebildet, die in einer Teilungsebene durch Klebung oder Verschweißung formfest miteinander verbunden sind. Diese Bauweise ist der zur Herstellung solcher Bauteile seither üblichen Blechformtechnik entlehnt und wird dem verwendeten Kunststoffmaterial nur teilweise gerecht. Die in das Kunststoffmaterial eingebetteten Fasern sind unausgerichtet und ergeben daher nur mittlere Festigkeitswerte. Lediglich im Bereich der an den Rändern der Schalen ausgebildeten Flansche läßt diese Bauweise die Einbettung ausgerichteter Fasern in das Kunststoffmaterial zu.

Es ist weiterhin bekannt, eine Blattfeder für Fahrzeuge aus einem faserverstärkten Kunststoff herzustellen (DE-OS 34 37 375). Die Blattfeder besteht dabei aus einer Vielzahl von in Längsrichtung verlaufenden, im wesentlichen endlosen Strängen aus faserigem, mit einem hitzehärtbaren Harz imprägnierten Material, die in einer Schleifenkonfiguration um zwei Büchsen gewickelt und anschließend durch Formen und Härten in ihre endgültige Form gebracht sind. Diese bekannte Blattfeder wird wie herkömmliche Blattfedern aus Stahl über Zapfen und Gelenkemit der Karosserie und den Achsen des Fahrzeugs verbunden.

Es ist auch bereits bekannt, eine federnde Stabachse mit federnder Spurstange aus glasfaserarmiertem, federndem Kunststoff herzustellen (DE-GM 19 04 380), um den Einbau besonderer Federungsvorrichtungen zwischen der Achse und dem Fahrgestell eines Fahrzeugs unnötig zu machen. Diese Konstruktion führt aber zu ungünstigen Bewegungen der Fahrzeugräder beim Einfedern mit starken Sturz- und Spuränderungen und ist daher wenig praxisgerecht.

Der Erfindung liegt die Aufgabe zugrunde, eine Radaufhängung für Fahrzeuge mit einem aus faserverstärktem Kunststoff bestehenden, federnden Radführungselement zu schaffen, die einfach und kostengünstig herstellbar ist und die sich durch eine hohe Lebensdauer und gute Radführungs- und Federungseigenschaften auszeichnet.

Erfindungsgemäß wird diese Aufgabe dadurch gelöst, daß das Radführungselement aus wenigstens einem stehend angeordneten, geschlossenen Ring besteht, der eine Vielzahl von in Längsrichtung verlaufenden, im wesentlichen endlosen Strängen aus faserigem Verstärkungsmaterial enthält, die durch Wickeln in eine Ringform gebracht sind. Mit der Erfindung wird ein neuartiges Radführungselement geschaffen, das die Mittel zur Federung und Führung eines Fahrzeugrades in sich vereinigt und das besonders einfach nach dem Wickelverfahren aus faserverstärktem Kunststoff herstellbar ist. Durch die stehende Ringform werden zwei übereinanderliegende Lenker gebildet, die eine exakte Radführung ermöglichen und die günstige Aufnahme der an einem Fahrzeugrad angreifenden Kräfte gewährleisten. Das erfindungsgemäße Radführungselement ist aufgrund seiner Federeigenschaften ohne Gelenke und besondere elastische Lagerungen mit der Karosserie und einem Radträger verbindbar, so daß der Aufwand für die Radaufhängung verringert und ihre Montage vereinfacht wird.

Durch Variation seiner Querschnittsform kann der Ring nach einem weiteren Vorschlag der Erfindung Zonen unterschiedlicher Steifigkeit aufweisen. Der Konstrukteur hat somit die Möglichkeit, die Führungs- und Federeigenschaften des Rings in der erforderlichen Weise den jeweils gegebenen Anwendungsfällen anzupassen. So können beispielsweise die Lenkerabschnitte des Rings in vertikaler Richtung federnd und in horizontaler Richtung steif ausgebildet sein. Zonen unterschiedlicher Steifigkeit können erfindungsgemäß auch dadurch erreicht werden, daß an dem Ring Versteifungselemente befestigt sind. Vorzugsweise sind dabei die Befestigungen des Rings an der Karosserie und am Radträger als Versteifungselement ausgebildet.

In einer bevorzugten Ausgestaltung weist der Ring einen im wesentlichen rechteckigen Querschnitt auf, wobei die Größe der Querschnittsfläche an jeder Stelle seines Umfangs bei unterschiedlichem Höhen-Breiten-Verhältnis im wesentlichen konstant ist. Dies hat den Vorteil, daß trotz unterschiedlicher Querschnittsformen das Materialgefüge an allen Stellen des Rings weitgehend homogen ist und die vorgegebenen Elastizitäts-und Festigkeitswerte mit der erforderlichen Genauigkeit eingehalten werden.

Nach einem weiteren Vorschlag der Erfindung kann der Ring etwa die Form eines Trapezes haben, dessen in horizontaler Richtung verlaufende Seiten einen oberen und einen unteren Lenker bilden und an dessen Schenkeln die Karosserie und ein Radträger befestigt sind. Es kann auch zweckmäßig sein, daß zwei Ringe gemeinsam einen Radträger mit der Karosserie verbinden. Dabei können die Ringe sowohl nebeneinander als auch hintereinander angeordnet sein.

Eine große Steifigkeit der Radaufhängung in Richtung der Fahrzeuglängsachse wird durch eine Anordnung erreicht, bei der zwei Ringe in einem Winkel zueinander angeordnet und am Scheitel des Winkels durch einen Radträger miteinander verbunden sind. Hierdurch wird durch beide Ringe ein oberer und ein unterer Dreieckslenker gebildet.

Erfindungsgemäß kann das Radführungselement auch aus zwei Ringen bestehen, die zu einem Bauteil vereinigt sind. Hierbei kann vorteilhaft eine innige Verbindung zwischen beiden Ringen dadurch erzielt werden, daß das faserige Verstärkungsmaterial in beiden Ringen aus einem einzigen in Form einer Acht gewickelten Bündel von Strängen besteht.

Eine vorteilhafte Radaufhängung kann nach einem weiteren Vorschlag der Erfindung auch dadurch geschaffen werden, daß ein gestreckter, sich über die Breite des Fahrzeugs erstreckender Ring an beiden Seiten je einen Radträger trägt und mit seinen quer zur Fahrzeuglängsachse verlaufenden Lenkerabschnitten im Bereich der Fahrzeugmitte an der Karosserie befestigt ist. Hierbei bildet der Ring ein einteiliges, federndes Achselement beispielsweise für die beiden Hinterräder eines Fahrzeugs, das sich durch geringen Bauaufwand und geringes Gewicht auszeichnet und gleichwohl den bestehden Anforderungen an eine exakte Radführung genügt. Vorzugsweise sind bei diesem Achselement die Befestigungsstellen der beiden Lenkerabschnitte an der Karosserie in Fahrzeuglängsrichtung gegeneinander versetzt, um eine größere Steifigkeit der Radführung in Fahrzeuglängsrichtung zu erzielen. Weiterhin kann erfindungsgemäß der untere Lenkerabschnitt zu seiner Mitte hin nach oben gebogen sein, wobei seine Befestigungsstelle etwa in der gleichen Höhe liegt wie die Befestigungsstelle des oberen Lenderabschnitts, wodurch eine größere Bodenfreiheit erzielt werden kann.

Weitere Merkmale und Vorteile der Erfindung ergeben sich aus der nachfolgenden Beschreibung einiger bevorzugter Ausführungsbeispiele, die in der Zeichnung dargestellt sind.

Es zeigen

Fig. 1 ein als Ring ausgebildetes Radführungselement, dessen Querschnittsabmessungen über den Umfang variieren,

Fig. 2 ein aus zwei Ringen gebildetes Radführungselement,

Fig. 3 ein aus zwei zu einem Bauteil vereinigten Ringen bestehendes Radführungselement,

Fig. 4 eine Ansicht von unten eines ringförmigen Radführungselements für die beiden Räder einer Achse,

Fig. 5 eine Ansicht von hinten des Radführungselements gemäß Fig. 4,

Fig. 6 eine Vorderansicht, teilweise geschnitten, einer Radaufhängung mit einem Radführungselement gemäß Fig. 3 und

Fig. 7 eine Draufsicht auf das Radführungselement der Radaufhängung gemäß Fig. 6.

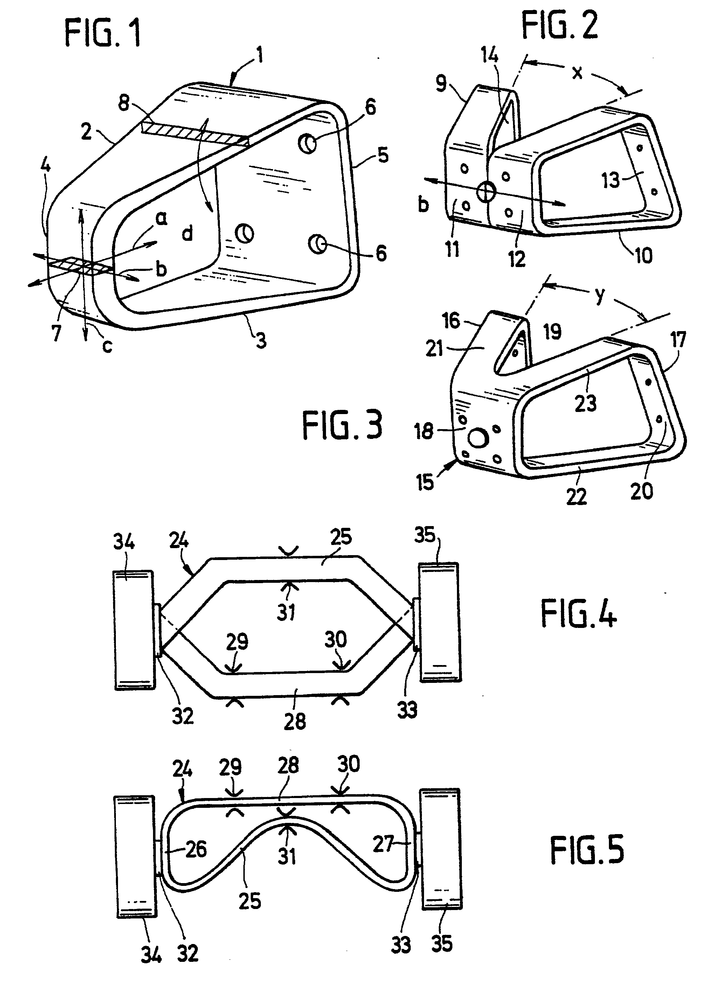

Figur 1 zeigt einen rechteckigen Ring, der ein federndes Radführungselement für ein Fahrzeugrad bildet. Mit 2 und 3 sind die beiden horizontalen Abschnitte des Rings 1, mit 4 und 5 seine beiden vertikalen Abschnitte bezeichnet. Die Abschnitte 2, 3 haben etwa die Form eines Trapezes und erfüllen die Funktion der Feder und eines oberen und unteren Lenkers. Die Abschnitte 4 und 5 sind rechteckig. Am Abschnitt 4 wird ein Radträger befestigt, der die Lagerung für ein Fahrzeugrad trägt. Der Abschnitt 5 dient zur Befestigung des Rings 1 an der Karosserie und ist hierzu mit Bohrungen 6 versehen.

Der Ring 1 ist aus Strängen aus im wesentlichen endlosem, faserigem Material hergestellt, das in mehreren übereinander liegenden Lagen zu einem ringförmigen Faserbündel gewickelt wird. Die Stränge können aus jeder geeigneten Art von faserigem Material bestehen. Es können Kunststofffasern, Mineralfasern, wie z.B. Glasfasern, Metallfasern, wie z.B. Stahldraht, Kohlenstoff- oder Graphitfasern oder Whisker verwendet werden. Vor dem Wickeln werden die Stränge mit einem flüssigen, härtbaren Harz imprägniert, beispielsweise einem Polyester- oder Epoxydharz.

Nach der Beendigung des Wickelvorgangs wird das ringförmige Faserbündel zu dem in Figur 1 dargestellten Ring 1 geformt und während des Formvorgangs wird durch die Einwirkung von Wärme das Harz gehärtet, wodurch der Ring 1 seine endgültige, formfeste und elastische Struktur erhält.

Obwohl die Größe der Querschnittsfläche des Rings 1 in allen Abschnitten 2 bis 5 im wesentlichen gleich ist, erhalten die einzelnen Abschnitte 2 bis 5 beim Formvorgang und u.U. teilweise auch bereits beim Wickelvorgang eine unterschiedliche Querschnittsform, damit der Ring 1 die physikalischen Eigenschaften erlangt, die er als Radführungselement benötigt. So ist der Querschnitt 7 des Abschnitts 4, an dem der Radträger angebracht wird, verhältnismäßig schmal und dick, um die in diesem Bereich erforderliche Steifigkeit in den Richtungen a und b zu erzielen. Die geringe Breite des Abschnitts 4 trägt weiterhin dazu bei, daß genügend Bauraum für im Radbereich unterzubringende Aggregate wie Bremsen, Spurhebel und ähnliches zur Verfügung steht.

Die horizontalen Abschnitte 2, 3 nehmen in der Breite vom Abschnitt 4 ausgehend bis zum Abschnitt 5 hin stetig zu. In der Dicke nehmen sie entsprechend stetig ab. Das Verhältnis von Länge zu Breite ihres Querschnitts wird somit zum Abschnitt 5 ständig größer. Der in der Zeichnung dargestellte Querschnitt 8 veranschaulicht die Abmessung die der Abschnitt 2 etwa in seiner Mitte hat. Durch diese Formgebung erlangen die Abschnitte 2, 3 die erforderliche elastische Nachgiebigkeit in den Bewegungsrichtungen d und die Steifigkeit, die zur Aufnahme der in den Richtungen b an dem Ring 1 angreifenden Kräfte benötigt wird. Die Aufnahme dieser Kräfte und die erforderliche Federarbeit wird dabei in beiden Abschnitten 2, 3 zu etwa gleichen Teilen übernommen.

Der Abschnitt 5 ist im wesentlichen als quadratische Platte von konstanter Breite und Dicke ausgebildet, wobei die Dicke etwa gleich der Dicke der Abschnitte 2, 3 am Übergang zu Abschnitt 5 ist. Durch seine Befestigung an der Karosserie wird der Abschnitt 5 zusätzlich verstärkt und seine Steifigkeit insbesondere in Richtung a erhöht.

Aufgrund der beschriebenen Ausgestaltung bildet der Ring 1 eine federnde Doppellenkeraufhängung für das Rad eines Fahrzeuges, die sich durch große Einfachheit und geringes Gewicht auszeichnet. Durch die elastische Verformbarkeit der Abschnitte 2, 3 und der gebogenen Übergangsbereiche zwischen der einzelnen Abschnitten 2 bis 5 sind keine herkömmlichen Gelenkverbindungen erforderlich. Dabei wird durch die Herstellung des Rings 1 nach dem beschriebenen Wickelverfahren eine große Gleichmäßigkeit in der Materialstruktur erzielt, so daß das angestrebte Verformungsverhalten des Rings 1 mit der erforderlichen Genauigkeit vorgebbar ist.

Figur 2 zeigt ein Radführungselement für die Radaufhängung eines Fahrzeugs, das aus zwei elastischen Ringen 9, 10 aus einem faserverstärkten Kunststoff zusammengesetzt ist. Die beiden Ringe 9, 10 sind in einem Winkel x zueinander angeordnet und liegen am Scheitel des Winkels x mit den Seitenkanten, ihrer vertikalen Abschnitte 11, 12 aneinander an. Die Außenflächen der Abschnitte 11, 12 liegen in einer gemeinsamen Ebene und bilden die Auflage für die Platte eines nicht dargestellten Radträgers, mit dem die Abschnitte 11, 12 beim Einbau in ein Fahrzeug verschraubt werden und durch den die Abschnitte 11, 12 miteinander verbunden werden. Mit den vertikalen Abschnitten 13, 14 werden die Ringe 9, 10 an die Karosserie angeschlossen. Diese Anordnung zeichnet sich durch eine besonders große Steifigkeit in der Richtung b bei geringem Gewicht aus. Weiterhin lassen sich die Ringe 9, 10 sehr einfach herstellen, da ihre Breite über den gesamten Querschnitt gleich ist.

Das in Figur 3 dargestellte Radführungselement 15 ist eine Weiterentwicklung gemäß Figur 2, bei der zwei in einem Winkel y zueinander angeordnete Ringelemente 16, 17 zu einem einstückigen Bauteil vereinigt sind. Im Scheitel des Winkels y bilden die im übrigen getrennten Ringelemente 16, 17 eine etwa quadratische, steife, vertikal ausgerichtete Platte 18, die zum Anschrauben eines Radträgers dient. Mit den Abschnitten 19, 20 werden die Ringelemente 16, 17 an die Karosserie eines Fahrzeugs angeschraubt. Um eine innige Verbindung der Ringelemente 16, 17 zu erzielen, werden beide Ringelemente 16, 17 aus einem einzigen Faserbündel hergestellt, das in Form einer Acht gewichelt wird, wobei sich die einzelnen Stränge im Bereich der Platte 18 jeweils kreuzen. So verläuft beispielsweise ein Faserstrang vom oberen Abschnitt 21 des Ringelements 16 durch die Platte 18 zum unteren Abschnitt 22 und weiter durch die Abschnitte 20, 23 erneut zur Platte 18 und durch den unteren Abschnitt des Ringelements 16 und über den Abschnitt 19 wieder zu seinem oberen Abschnitt und so fort. Durch dieses Wickeln der Stränge der Verstärkungsfasern wird eine besondere Steifigkeit der Platte 18 erzielt. Weiterhin ergibt sich ein günstiger Verlauf der Verstärkungsfasern an der hochbeanspruchten Übergangsstelle von der Platte 18 in die einzelnen Ringelemente 16, 17, die eine Delaminierung der Fasern bei der elastischen Verformung des Radführungselementes 15 entgegenwirkt.

Bei dem in den Figuren 4 und 5 dargestellten Ausführungsbeispiel ist ein im Wickelverfahren hergestellter Ring 24 aus faserverstärktem Kunststoff als Radführungs- bzw. als Achselement für die beiden Räder einer Fahrzeugachse vorgesehen. Der Ring 24 hat eine gestreckte, sich quer zur Fahrzeuglängsachse über die Breite des Fahrzeugs erstreckende Form mit einem unteren Abschnitt 25, zwei seitlichen Abschnitten 26, 27 und einem oberen Abschnitt 28. Der obere Abschnitt 28 wird an den Stellen 29, 30 mit dem Fahrgestell oder der Karosserie eines Fahrzeugs verbunden. Zwischen den Stellen 29, 30 verläuft der Abschnitt 28 gerade und knickt dann an beiden Seiten symmetrisch jeweils unter einem Winkel von etwa 45 Grad zur Längsachse des Fahrzeugs ab, bis er in die seitlichen Abschnitte 26, 27 mündet. Die Abschnitte 26, 27 verlaufen etwa senkrecht zur Aufstandsebene des Fahrzeugs und sind jeweils mit einem Radträger 32, 33 verbunden, an dem jeweils ein Fahrzeugrad 34, 35 drehbar gelagert ist. An die unteren Enden der Abschnitte 26, 27 schließt sich der Abschnitt 25 an, der zu einer in seiner Mitte liegenden Befestigungsstelle 31 hin nach oben gebogen ist. Die seitlichen Bereiche des Abschnitts 25 verlaufen ebenfalls symmetrisch in einem Winkel von etwa 45 Grad zur Längsachse des Fahrzeugs, jedoch in entgegengesetzter Richtung wie die seitlichen Bereiche des Abschnitts 25. Hierdurch entsteht ein Abstand in Fahrzeuglängsrichtung zwischen den Befestigungsstellen 29, 30 am oberen Abschnitt 28 und der Befestigungsstelle 31 am unteren Abschnitt 25, wodurch der Ring 24 die zur Radführung erforderliche Steifigkeit in Fahrzeuglängsrichtung erhält. Die Ausbildung des Ringes 24 eignet sich besonders als Radaufhängung für nicht angetriebene Hinterräder eines Fahrzeugs. Dabei kann durch die Lage der Befestigungsstellen 29, 30, 31, denen auch noch weitere Befestigungsstellen hinzugefügt werden können, das Federungsverhalten der Räder in der gewünschten Weise variiert werden.

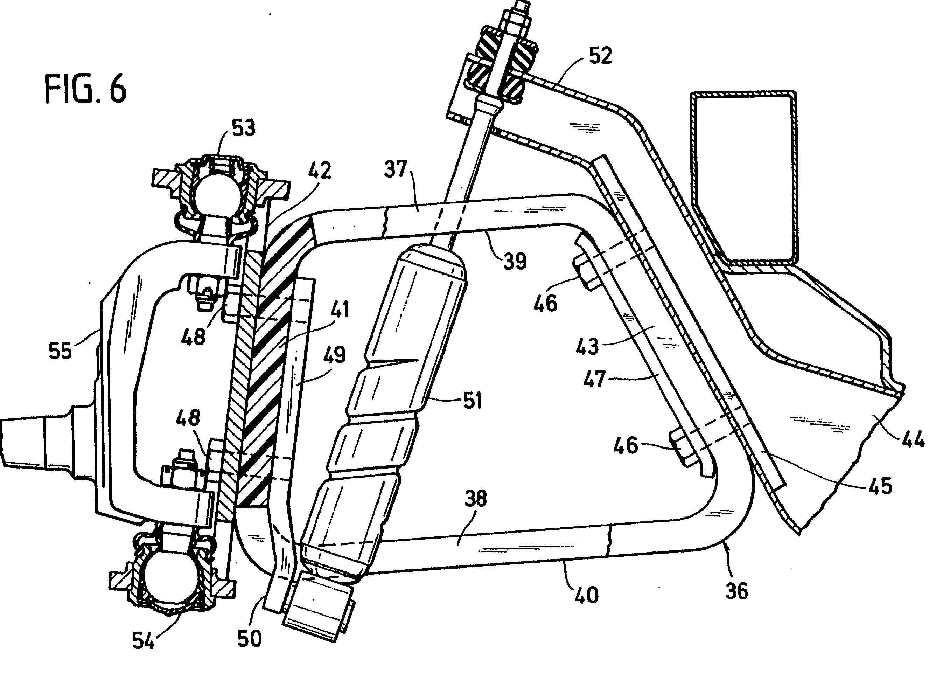

Figur 6 zeigt eine Radaufhängung für ein lenkbares Vorderrad eines Fahrzeugs mit einem federnden Radführungselement 36, das in seinem grundsätzlichen Aufbau dem in Figur 3 dargestellten Radführungselement entspricht. Das Radführungselement 36 besteht aus zwei zu einem Bauteil vereinigten Ringen 37, 38, die nach dem zuvor beschriebenen Wickelverfahren aus faserverstärktem Kunststoff hergestellt sind. Beide Ringe 37, 38 haben, in Fahrzeuglängsrichtung gesehen die Form eines Trapezes. Die parallelen Trapezseiten bilden zwei obere, kürzere Lenker 39 und zwei untere, längere Lenker 40. Die auf der Fahrzeugaußenseite liegenden Trapezschenkel sind zu einer Platte 41 vereinigt, an der ein Achsschenkelträger 42 befestigt ist. Die beiden anderen Trapezschenkel 43 sind mit einem Achsschemel 44 einer Fahrzeugkarosserie verbunden. An der Verbindungsstelle ist der Achsschemel 44 durch eine innenliegende Platte 45 mit Gewindebohrungen verstärkt, in die Befestigungsschrauben 46 eingeschraubt sind, die Bohrungen in den Schenkeln 43 und einer außen auf die Schenkel 43 aufliegenden Versteifungsplatte 47 durchgreifen. Durch diese Ausgestaltung der Verbindung wird eine solche Versteifung der Schenkel 43 erreicht, daß sich genau definierte Biegeachsen an den bogenförmigen Übergangsstellen zu den Lenkern 39, 40 ergeben.

Die Befestigung des Achsschenkelträgers 42 an der Platte 41 ist ähnlich ausgestaltet. Durch Bohrungen im Achsschenkelträger 42 und der Platte 41 greifen Befestigungsschrauben 48 in Gewindebohrungen einer auf der Innenseite der Platte 41 angeordneten Lagerplatte 49 ein. Der Achsschenkelträger 42 und die Lagerplatte 49 bilden auf diese Weise eine zusätzliche Versteifung für die Platte 41 des Radführungselements 36. Die Lagerplatte 49 ist zusätzlich mit einem Arm 50 versehen, der nach unten durch den Zwischenraum zwischen den unteren Lenkern 40 hindurchgreift und an dem das untere Ende eines Stoßdämpfers 51 befestigt ist. Mit seinem oberen Ende ist der Stoßdaämper 51 in üblicher Weise an einem durch den Achsschemel 44 gebildeten Träger 52 oberhalb der oberen Lenker 39 angeschlossen. Der Stoßdämpfer 51 greift dabei zwischen den oberen Lenkern 39 hindurch.

In den Achschenkelträger 42 sind in üblicher Weise zwei Kugelgelenke 53, 54 eingesetzt, deren Gelenkzapfen mit einem Achschenkel 55 verschraubt sind, der zur Lagerung eines Vorderrads dient.

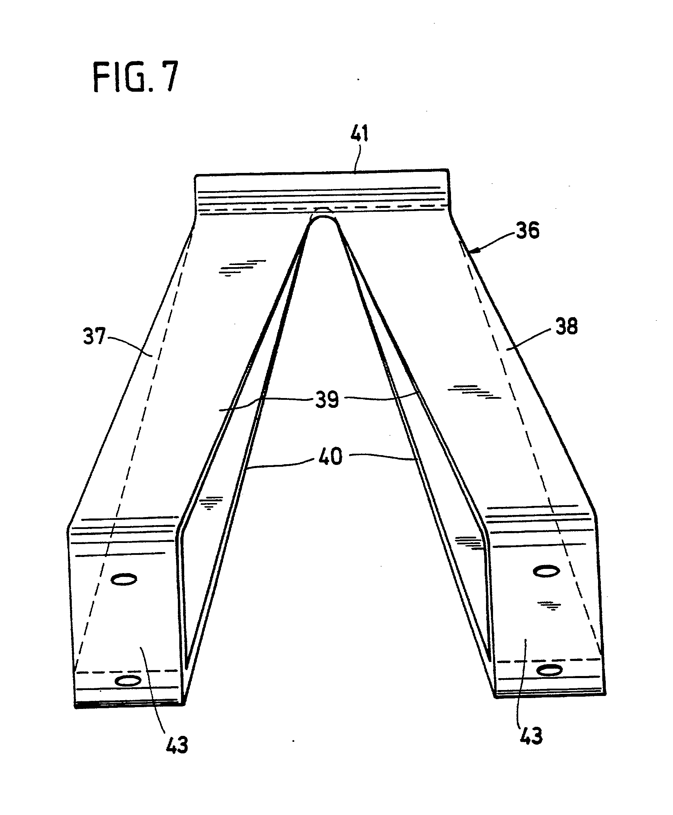

Die Ringe 37, 38 des Radführungselements 36 haben, wie sich aus Figur 6 in Verbindung mit Figur 7 sehen läßt, einen rechteckigen Querschnitt, dessen Größe über den gesamten Umfang der Ringe im wesentlichen konstant ist. Diese Form ist der Herstellung des Radführungselements nach dem oben beschriebenen Wickelverfahren angepaßt und ermöglicht eine einfache Formgebung vor dem Aushärten des Kunststoffs. Die beiden Ringe 37, 38 sind symmetrisch zueinander ausgebildet und angeordnet, so daß das Radführungselement 36 auf beiden Seiten eines Fahrzeuges eingebaut werden kann.

## Patentansprüche

1. Radaufhängung für Fahrzeuge mit einem aus faserverstärktem Kunststoff bestehenden, federnden Radführungselement,
**dadurch gekennzeichnet,**
daß das Radführungselement aus wenigstens einem stehend angeordneten, geschlossenen Ring (1, 24) besteht, der eine Vielzahl von in Längsrichtung verlaufenden, im wesentlichen endlosen Strängen aus faserigem Verstärkungsmaterial enthält, die durch Wickeln in eine Ringform gebracht sind.

2. Radaufhängung nach Anspruch 1,
**dadurch gekennzeichnet,**
daß der Ring (1) durch Variation seiner Querschnittsform Zonen (2, 3, 4, 5) unterschiedlicher Steifigkeit aufweist.

3. Radaufhängung nach einem der Ansprüche 1 oder 2,
**dadurch gekennzeichnet,**
daß an dem Ring (37, 38) Versteifungselemente (47, 49) befestigt sind.

4. Radaufhängung nach Anspruch 3,
**dadurch gekennzeichnet,**
daß die Befestigung des Rings (37, 38) an der Karosserie (44) und am Radträger (42) als Versteifungselement ausgebildet ist.

5. Radaufhängung nach einem vorhergehenden Anspruch,
**dadurch gekennzeichnet,**
daß der Querschnitt des Rings (1, 37, 38) im wesentlichen rechteckig ist, wobei die Größe der Querschnittsfläche (7, 8) an jeder Stelle seines Umfangs auch bei unterschiedlichem Höhen-Breiten-Verhältnis im wesentlichen konstant ist.

6. Radaufhängung nach einem vorhergehenden Anspruch,
**dadurch gekennzeichnet,**
daß der Ring (37, 38) etwa die Form eines Trapezes hat, dessen in horizontaler Richtung verlaufende Seiten einen oberen Lenker (39) und einen unteren Lenker (40) bilden und an dessen Schenkeln (41, 43) die Karosserie (44) und ein Radträger (42) befestigt sind.

7. Radaufhängung nach einem vorhergehenden Anspruch,
**dadurch gekennzeichnet,**
daß zwei Ringe (9, 10, 16, 17, 37, 38) gemeinsam einen Radträger mit der Karosserie verbinden.

8. Radaufhängung nach Anspruch 7,
**dadurch gekennzeichnet,**
daß beide Ringe (9, 10, 16, 17, 37, 38) in einem Winkel (x, y) zueinander angeordnet und am Scheitel des Winkels (x, y) durch einen Radträger (42) miteinander verbunden sind.

9. Radaufhängung nach einem der Ansprüche 7 oder 8,
**dadurch gekennzeichnet,**
daß das Radführungselement (15, 36) aus zwei Ringen (16, 17, 37, 38) besteht, die zu einem Bauteil vereinigt sind.

10. Radaufhängung nach Anspruch 9,
**dadurch gekennzeichnet,**
daß das faserige Verstärkungsmaterial in beiden Ringen (16, 17, 37, 38) aus einem einzigen in Form einer Acht gewickelten Bündel von Strängen besteht.

11. Radaufhängung nach einerm der Ansprüche 1 bis 5,
**dadurch gekennzeichnet,**
daß ein gestreckter, sich über die Breite des Fahrzeuges erstreckender Ring (24) an beiden Seiten (26, 27) je einen Radträger (32, 33) trägt und mit seinen quer zur Fahrzeuglängsachse verlaufenden Lenkerabschnitten (25, 28) im Bereich der Fahrzeugmitte an der Karosserie befestigt ist.

12. Radaufhängung nach Anspruch 11,
**dadurch gekennzeichnet,**
daß die Befestigungsstellen (29, 30, 31) der beiden Lenkerabschnitte (25, 28) an der Karosserie in Fahrzeuglängsrichtung gegeneinander versetzt sind.

13. Radaufhängung nach einem der Ansprüche 11 oder 12,
**dadurch gekennzeichnet,**
daß der untere Lenkerabschnitt (25) zu seiner Mitte hin nach oben gebogen ist und seine Befestigungsstelle (31) etwa in der gleichen Höhe liegt wie die Befestigungsstelle (29, 30) des oberen Lenkerabschnitts (28).

## Claims

1. Wheel suspension for vehicles with a resilient wheel guide element consisting of a fibre-reinforced synthetic material, characterised in that the wheel guide element consists of at least one closed ring (1, 24), arranged upright, which contains a plurality of essentially continuous strands of fibrous reinforcing material running in the longitudinal direction which through winding are transformed into an annular shape.

2. Wheel suspension according to claim 1, characterised in that the ring (1) has zones (2, 3, 4, 5) of varying rigidity as a result of variations in its cross-sectional shape.

3. Wheel suspension according to one of the claims 1 or 2, characterised in that the ring (37, 38) has reinforcing elements (47, 49) secured to it.

4. Wheel suspension according to claim 3, characterised in that the attachment of the ring (37, 38) to the body (44) and to the wheel support (42) is in the form of a reinforcing element.

5. Wheel suspension according to one of the preceding claims, characterised in that the cross-section of the ring (1, 37, 38) is essentially rectangular, wherein the size of the cross-sectional area (7, 8) is essentially constant at any point of its circumference even when the height-width ratio is different.

6. Wheel suspension according to one of the preceding claims, characterised in that the ring (37, 38) has the approximate shape of a trapeze whose sides extending in the horizontal direction form an upper wheel fork (39) and a lower wheel fork (40) the legs (41, 43) of which are fixed to the body (44) and a wheel support (42).

7. Wheel support according to one of the preceding claims, characterised in that two rings (9, 10, 16, 17, 37, 38) together connect a wheel support with the body.

8. Wheel suspension according to claim 8, characterised in that both rings (9, 10, 16, 17, 37, 38) are arranged at an angle (x, y) to each other and through a wheel support (42) connected with each other at the apex of the angle (x, y).

9. Wheel suspension according to one of the claims 7 or 8, characterised in that the wheel guide element (15, 36) consists of two rings (16, 17, 37, 38) which are combined to form one part.

10. Wheel suspension according to claim 9, characterised in that the fibrous reinforcing material in both rings (16, 17, 37, 38) consists of a single bundle of strands wound together in the shape of a figure eight.

11. Wheel suspension according to one of the claims 1 to 5, characterised in that an elongated ring (24), spanning the width of the vehicle, carries a wheel support (32, 33) on each of the two sides (26, 27) and is secured to the body in the region of the vehicle's centre by means of the wheel fork sections (25, 28) extending transverse to the longitudinal axis of the vehicle.

12. Wheel suspension according to claim 11, characterised in that the securing points (29, 30, 31) of the two wheel fork sections (25, 28) on the body are oppositely displaced in the longitudinal direction of the vehicle.

13. Wheel suspension according to one of the claims 11 or 12, characterised in that the lower wheel fork section (25) is curved upwards towards its centre and its securing point (31) is situated approximately at the same level as the securing point (29, 30) of the upper wheel fork section (28).

## Revendications

1. Suspension de roue pour véhicule, comportant un élément de guidage de roue, élastique, en matière synthétique renforcée par des fibres, caractérisée en ce que l'élément de guidage de roue se compose d'au moins un anneau fermé (1, 24), disposé verticalement et qui contient une multitude de filaments pour l'essentiel continus, orientés dans la direction longitunale, en matériau fibreux de renforcement, qui sont mis en forme d'anneau par enroulement.

2. Suspension de roue selon la revendication 1, caractérisée en ce que l'anneau (1) présente des zones (2, 3, 4, 5) dont la rigidité est modifiée par variation de la forme transversale dudit anneau (1).

3. Suspension de roue selon la revendication 1 ou 2, caractérisée en ce que des éléments de renforcement (47, 49) sont fixés sur l'anneau (37, 38).

4. Suspension de roue selon la revendication 3, caractérisée en ce que la fixation de l'anneau (37, 38) sur la carrosserie (44) et sur le support de roue (42) est réalisée en tant qu'élément de renforcement.

5. Suspension de roue selon l'une quelconque des revendications précédentes, caractérisée en ce que la coupe transversale de l'anneau (1, 37, 38) est de forme générale rectangulaire, l'aire de la surface de section (7, 8) étant approximativement constante en chaque point de sa périphérie même si le rapport hauteur/largeur est différent.

6. Suspension de roue selon l'une quelconque des revendications précédentes, caractérisée en ce que l'anneau (37, 38) présente approximativement la forme d'un trapèze dont les côtés orientés dans la direction longitudinale forment un bras oscillant transversal supérieur (39) et un bras oscillant transversal inférieur (40) et sur les côtés latéraux (41, 43) duquel sont fixés la carrosserie (44) et un support de roue (42).

7. Suspension de roue selon l'une quelconque des revendications précédentes, caractérisée en ce que deux anneaux (9, 10 ; 16, 17 ; 37, 38) groupés relient un support de roue à la carrosserie.

8. Suspension de roue selon la revendication 7, caractérisée en ce que les deux anneaux (9, 10 ; 16, 17 ; 37, 38) sont disposés l'un par rapport à l'autre selon un angle (x, y) et sont reliés ensemble au sommet de l'angle (x, y) au moyen d'un support de roue (42).

9. Suspension de roue selon la revendication 7 ou 8, caractérisée en ce que l'élément de guidage de roue (15, 36) se compose de deux anneaux (16, 17 ; 37, 38) réunis en un seul élément de construction.

10. Suspension de roue selon la revendication 9, caractérisée en ce que le matériau fibreux de renforcement se compose dans les deux anneaux (16, 17; 37, 38) d'un seul faisceau de filaments enroulés en forme de huit.

11. Suspension de roue selon l'une quelconque des revendications 1 à 5, caractérisée en ce qu'un anneau (24) s'étendant sur toute la largeur du véhicule porte sur les deux côtés (26, 27) respectivement un support de roue (32, 33) et est fixé à la carrosserie, dans la zone du centre du véhicule, par ses sections (25, 28) de bras oscillants transversaux orientées perpendiculairement à l'axe longitudinal du véhicule.

12. Suspension de roue selon la revendication 11, caractérisée en ce que les points de fixation (29, 30, 31) des deux sections (25, 28) de bras transversaux sur la carrosserie sont désaxés l'un par rapport à l'autre dans la direction longitudinale du véhicule.

13. Suspension de roue selon la revendication 11 ou 12, caractérisée en ce que la section inférieure (25) de bras transversal est arquée vers le haut en son centre, son point de fixation (31) se trouvant approximativement au même niveau que le point de fixation (29, 30) de la section supérieure (28) de bras de suspension.

FIG.1

FIG.2

FIG.3

FIG.4

FIG.5

FIG. 6

## FIG. 7